(19) Europäisches Patentamt

European Patent Office

Office européen des brevets

(11) **EP 1 089 061 B1**

(12) **EUROPÄISCHE PATENTSCHRIFT**

(45) Veröffentlichungstag und Bekanntmachung des Hinweises auf die Patenterteilung:
**19.04.2006 Patentblatt 2006/16**

(51) Int Cl.:
$G01J\ 3/44$ (2006.01)    $G02B\ 21/00$ (2006.01)

(21) Anmeldenummer: **00119050.3**

(22) Anmeldetag: **02.09.2000**

(54) **Laserscanmikroskop und Verfahren zur Referenzkorrektur bei einem Laserscanmikroskop**

Laser scanning microscope and method of correcting the reference for a laser scanning micrsoscope

Microscope à balayage laser et méthode de correction de la référence pour un microscope à balayage laser

(84) Benannte Vertragsstaaten:
**DE FR GB**

(30) Priorität: **15.09.1999 DE 19944148**

(43) Veröffentlichungstag der Anmeldung:
**04.04.2001 Patentblatt 2001/14**

(73) Patentinhaber: **Leica Microsystems CMS GmbH 35578 Wetzlar (DE)**

(72) Erfinder:
- **Engelhardt, Johann, Dr. 76669 Bad Schönborn (DE)**
- **Ulrich, Heinrich, Dr. 69121 Heidelberg (DE)**
- **Hay, Wiliam C. D-64646 Heppenheim (DE)**

(74) Vertreter: **Naumann, Ulrich Patentanwälte, Ullrich & Naumann, Luisenstrasse 14 69115 Heidelberg (DE)**

(56) Entgegenhaltungen:
**EP-A- 0 300 571        US-A- 5 168 157
US-A- 5 640 270        US-A- 5 668 826**

- **PATENT ABSTRACTS OF JAPAN vol. 1997, no. 08, 29. August 1997 (1997-08-29) & JP 09 101460 A (HIRAIWA YOSHINORI), 15. April 1997 (1997-04-15)**
- **DEMTRÖDER: "Laserspektroskopie. Grundlagen und Techniken. 3. Auflage" LASERSPEKTROSKOPIE. GRUNDLAGEN UND TECHNIKEN, BERLIN, SPRINGER, DE, 1993, Seiten 214-223, XP002246091**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Laserscanmikroskop, vorzugsweise konfokales Laserscanmikroskop, mit einem zwischen einer Laserlichtquelle und einem Objekt verlaufenden Beleuchtungsstrahlengang und einem zwischen dem Objekt und einer Detektionseinrichtung verlaufenden Detektionsstrahlengang, wobei ein zur Referenzmessung dienender Referenzstrahlengang vorgesehen ist, in den aus dem Beleuchtungsstrahlengang Referenzlicht einkoppelbar ist und wobei das Referenzlicht qualitativ und/oder quantitativ nachweisbar ist. Des Weiteren betrifft die Erfindung ein Verfahren zur Referenzkorrektur bei einem entsprechenden Laserscanmikroskop.

Aus der EP-A-03 005 71 ist ein gattungsbildendes Laserscanmikroskop bekannt, mit einem zwischen einer Lichtquelle und einem Objekt verlaufenden Beleuchtungsstrahlengang, einem zwischen dem Objekt und einer Detektionseinrichtung verlaufenden Detektionsstrahlengang und einem zur Referenzmessung dienenden Referenzstrahlengang, wobei aus dem Beleuchtungsstrahlengang Referenzlicht in den Referenzstrahlengang einkoppelbar ist. Zur Detektion des Referenzlichts ist eine weitere Detektionseinrichtung vorgesehen, nämlich zusätzlich zu der Detektionseinrichtung für das Detektionslicht.

Bei dem gattungsbildenden Lasermikroskop aus der EP-A-03 005 71 ist wesentlich, dass dort zur genauen Linearabbildung einer Oberfläche Informationen über die jeweilige Position des Abtastflecks auf der abzubildenden Oberfläche zur Verfügung gestellt werden. Das Referenzlicht gelangt über ein Gitter zu einem eigens zur Detektion des Referenzlichts vorgesehenen Detektor, so dass bei Verlagerung des Bezugsflecks über das Gitter eine Modulation im Ausgangssignal möglich ist. So ist ein besonderer Detektor erforderlich, um eine Modulation der Ausgangssignale des Laserscanmikroskops vornehmen zu können.

Die gattungsbildende Vorrichtung gemäß EP-A-03 005 71 ist in der Konstruktion aufwendig, zumal in Bezug auf das Referenzlicht ein weiterer Detektor erforderlich ist. Der diesbezügliche Justageaufwand ist erheblich. Außerdem eignen sich die dort angegebenen Maßnahmen allenfalls zur Erzeugung genauer Linearabbildungen unter Nutzung eines Gitters, was einen weiteren konstruktiven Aufwand mit sich bringt. Drifts einzelner Baugruppen lassen sich durch die bekannte Vorrichtung nicht zuverlässig kompensieren.

Aus der US-A-5 168 157 ist ebenfalls ein Laserscanmikroskop bekannt, wobei gemäß dortiger Figur 15 nebst dazugehörender Beschreibung sowie gemäß dortigem Patentanspruch 26 ein Referenzstrahlengang vorgesehen ist. Über das Referenzlicht sollen Schwankungen in der Lichtstärke des Beleuchtungslichts zum Erhalt einer guten Abbildungsqualität kompensiert werden.

Auch die US-A-5 640 270 zeigt ein Laserscanmikroskop, welches in Bezug auf die relevanten Merkmale nicht über das hinausgeht, was die EP-A-03 005 71 und die US-A-5 168 157 zeigen.

Der vorliegenden Erfindung liegt nun die Aufgabe zugrunde, das gattungsbildende Laserscanmikroskop derart auszugestalten und weiterzubilden, dass es möglich ist, quantitative und/oder qualitative Messungen unterschiedlicher Objekte mit einer möglichst hohen Genauigkeit durchzuführen und dabei unabhängig von sich verändernden Messbedingungen, die sich aufgrund störender äußerer Einflüsse ergeben können, reproduzierbare Messergebnisse mit einem einfachen konstruktiven Aufwand zu erzielen. Ein entsprechendes Verfahren soll ebenfalls angegeben werden.

Die voranstehende Aufgabe wird durch die Merkmale der Patentansprüche 1 und 10 gelöst.

In erfindungsgemäßer Weise ist erkannt worden, dass es grundsätzlich möglich ist, das Referenzlicht über die gleiche Detektionseinrichtung zu detektieren, die auch zur Detektion des eigentlichen Detektionslichts im Detektionsstrahlengang dient. Somit reicht in erfindungsgemäßer Weise eine einzige Detektionseinrichtung aus, um einerseits das vom Objekt kommende Detektionslicht und andererseits das über den Referenzstrahlengang kommende Referenzlicht zu detektieren. Wesentlich ist dabei, dass das Referenzlicht zur Kompensation von Drifts einzelner Baugruppen dient und über die Detektionseinrichtung qualitativ und/oder quantitativ nachweisbar ist.

Neben dem Referenzlicht, welches über die Detektionseinrichtung detektierbar ist, wird in erfindungsgemäßer Weise ein weiterer Lichtstrahl ausgekoppelt, dessen Intensität über einen lichtempfindlichen Sensor nachgewiesen bzw. gemessen wird. Das so gemessene, der Ausgangsleistung der verwendeten Laserlichtquelle direkt proportionale Signal wird als weiteres Referenzsignal verwendet, nämlich als Referenzspannung für die Digitalisierungseinrichtung. So lassen sich in erfindungsgemäßer Weise mit einfachen Mitteln die sich negativ auf die Objektmessung auswirkenden Intensitätsschwankungen der Laserlichtquelle korrigieren. Insbesondere können Kurzzeit-Intensitätsschwankungen der Laserlichtquelle, beispielsweise Modensprünge, korrigiert werden, sofern diese Korrektur während der Datenaufnahme des Objekts, d.h. während dem eigentlichen Messvorgang, durchgeführt wird.

Unter Nutzung des Referenzlichts aus dem Referenzstrahlengang lassen sich vor allem Langzeitdrifts der Einzelkomponenten des Lasermikroskops kompensieren. Zusätzlich dient die Auskopplung des weiteren Lichtstrahls zur unmittelbaren Signalkorrektur in der Digitalisierungseinrichtung, nämlich in Bezug auf Kurzzeit-Intensitätsschwankungen der Laserlichtquelle.

Durch Kombination zweier voneinander unabhängiger Kompensationen mittels Referenzlicht lässt sich unabhängig von sich verändernden Messbedingungen und unabhängig von störenden äußeren Einflüssen eine hohe reproduzierbare Messgenauigkeit erzielen.

Der Referenzstrahlengang verläuft zwischen der Auskopplungsstelle und der Detektionseinrichtung, wobei die Auskopplungsstelle im Beleuchtungsstrahlengang des Laserscanmikroskops vorgesehen ist. Das in den Referenzstrahlengang eingekoppelte Laserlicht der Laserlichtquelle wird im folgenden Referenzlicht genannt.

Im Hinblick auf eine konkrete Ausgestaltung befindet sich die Auskopplungsstelle zwischen der Laserlichtquelle und der Strahlteilereinrichtung. Somit wird sichergestellt, dass lediglich Licht der Laserlichtquelle in den Referenzstrahlengang eingekoppelt wird, also bspw. keine Objekt-Fluoreszenzlicht- oder konventionelle Mikroskop-Durchlichtanteile dem Referenzlicht überlagert sind.

Wenn als Strahlteilereinrichtung ein AOBS (Acousto-Optical-Beam-Splitter) verwendet wird, ist es von Vorteil, wenn sich die Auskopplungsstelle direkt bei dem AOBS befindet. Ein Laserscanmikroskop mit einem AOBS wird in der DE-Patentanmeldung 199 06 757.0 beschrieben.

In vorteilhafter Weise sind in dem Referenzstrahlengang weitere optische Komponenten angeordnet. Hierzu zählt eine Streuscheibe, die beispielsweise aus einer Glasplatte mit aufgerauhter Oberfläche oder aus einer Glasplatte aus Milchglas besteht. Des weiteren ist in dem Referenzstrahlengang mindestens ein Strahlumlenkelement angeordnet, so dass hierdurch eine Strahlführung des Referenzstrahlengangs realisierbar ist.

Im Hinblick auf eine konkrete Ausgestaltung ist in dem Referenzstrahlengang mindestens ein lichtempfindlicher Sensor angeordnet, mit dessen Hilfe Referenzlicht nachgewiesen werden kann. Dieser lichtempfindliche Sensor ist vorzugsweise lediglich für einen Teilstrahlengang des Referenzstrahlengangs vorgesehen.

In dem Referenzstrahlengang ist mindestens ein Strahlabschwächer (Graufilter oder Neutralglasfilter) angeordnet, mit dessen Hilfe die Referenzlichtintensität an die Eigenschaften der Detektionseinheit angepaßt werden kann. In vorteilhafter Weise wird die Durchlässigkeit der Strahlabschwächer so gewählt, dass die Referenzlichtintensität die gleiche Größenordnung aufweist wie die vom Objekt nachzuweisende Lichtintensität, so dass zur Detektion des Referenz- und Detektionslichts nahezu der gleiche Dynamikbereich vorliegt.

Ein Filteraufnahmeelement ist ebenfalls in dem Referenzstrahlengang angeordnet, das auf den Beleuchtungs- und/oder Detektionsstrahlengang wirkt. Hierbei kann es sich um ein konventionelles Filterrad oder um einen linear angeordneten Filterschieber handeln, in die ein oder mehrere unterschiedliche Filter eingesetzt werden können. Üblicherweise werden als Filtereinsätze beschichtete Glasplatten verwendet, die ein wellenlängenspezifisches Reflexions- bzw. Transmissionsverhalten aufweisen. Auch die Verwendung von farbigen Glasplatten bzw. von sogenannten Holographic-Notch-Filtern ist durchaus üblich. Das Filteraufnahmeelement ist beweglich angeordnet, so beispielsweise drehbar oder in linearer Richtung verschiebbar. Mit dem mit Filtereinsätzen bestückten Filteraufnahmeelement ist es möglich, den mit der Detektionseinrichtung nachzuweisenden Strahlengang zu selektieren. So wird in vorteilhafter Weise in einer Stellung des Filteraufnahmeelements nur Licht vom Detektionsstrahlengang zur Detektionseinrichtung selektiert, in einer anderen Stellung des Filteraufnahmeelements wird nur Licht vom Referenzstrahlengang für die Detektionseinrichtung selektiert und in einer weiteren Stellung des Filteraufnahmeelements wird zur Messung eines Dunkelstroms kein Licht für die Detektionseinrichtung selektiert.

Da die in dem Filteraufnahmeelement verwendeten Filter teilweise temperaturabhängig sind und eine Temperaturveränderung sich in einer veränderten Transmissionscharakteristik der Filter auswirkt, wird das Filteraufnahmeelement auf einer konstanten Temperatur gehalten. Hierzu wird das gesamte Filteraufnahmeelement mit Hilfe einer geeignet geregelten Heizung, insbesondere mit einem Heizwiderstand, beheizt.

In einer bevorzugten Ausführung sind die weiteren optischen Elemente in dem Referenzstrahlengang von der Auskopplungsstelle aus gesehen nach der Streuscheibe angeordnet. Das von der Laserlichtquelle in den Referenzstrahlengang eingekoppelte kohärente Laserlicht ist nach dem Durchgang durch die Streuscheibe nicht mehr kohärent, so dass die Wechselwirkung des durch die Streuscheibe hindurch getretenen Lichts mit den weiteren optischen Elementen im Referenzstrahlengang keine unerwünschten Interferenzerscheinungen hervorruft. Interferenzerscheinungen dieser Art wirken sich äußerst störend auf Messungen aus, da bereits geringste Temperatur- bzw. dadurch induzierte Weglängenänderungen im optischen Strahlengang mit einer Intensitätsmodulation des zu messenden Lichts verbunden sind.

In vorteilhafter Weise wird als Auskopplungselement ein dicker Strahlteiler verwendet, der als planparallele Glasplatte ausgestaltet sein kann. In einer bevorzugten Ausführung ist dieser Strahlteiler mindestens vier Millimeter dick, im Winkel von 45° zum Beleuchtungsstrahlengang angeordnet und es wird neben dem Referenzstrahl mindestens ein weiterer Lichtstrahl ausgekoppelt. Bei dem weiteren Lichtstrahl könnte es sich beispielsweise um den Sekundärreflex des von der Laserlichtquelle kommenden Laserlichts an der Strahlteilerplatte handeln. Mit dem Sekundärreflex ist die in der dicken Strahlteilerplatte auftretende, erste interne Reflexion an der - von der Laserlichtquelle aus gesehen - abgewandten Glasoberfläche gemeint, die nach Durchtritt durch die der Laserlichtquelle zugewandten Glasoberfläche der Strahlteilerplatte in Richtung des Referenzstrahlengangs austritt. In Abhängigkeit der Dicke der verwendeten Strahlteilerplatte ist somit ein lateraler Parallelversatz des zusätzlich ausgekoppelten Lichtstrahls zu dem Referenzstrahl gegeben.

Die Intensität des zusätzlich ausgekoppelten Lichtstrahls wird mit einem lichtempfindlichen Sensor nachgewiesen bzw. gemessen. Das so gemessene, der Ausgangsleistung der verwendeten Laserlichtquelle direkt proportionale Signal wird als Referenzsignal für die Detektionseinrichtung verwendet. In einer bevorzugten Ausführung wird das so gewonnene Referenzsignal als Referenzspannung für die Digitalisierungseinrichtung benutzt. Somit kann in vorteilhafter Weise und mit einfachen Mitteln (lediglich einer entsprechenden Photodiode) die sich negativ auf die Objektmessung auswirkende Intensitätsschwankung der Laserlichtquelle korrigiert werden. insbesondere können hierdurch Kurzzeit-Intensitätsschwankungen der Laserlichtquelle - beispielsweise Modensprünge - korrigiert werden, wenn in vorteilhafter Weise diese Korrektur während der Datenaufnahme des Objekts, also dem eigentlichen Meßvorgang, durchgeführt wird.

Im Hinblick auf die Korrektur von vor allem Langzeitschwankungen der in dem Mikroskop eingebauten Komponenten ist es vorteilhaft, die mit dem Laserscanmikroskop gemessenen Bilddaten mit Hilfe von den mit dem Referenzstrahlengang gemessenen Referenzsignalen geeignet zu korrigieren. Mit dieser Maßnahme wirkt man vor allem der Langzeitdrift der Detektionseinrichtung oder der Laserlichtquelle entgegen. Diese Drift ergibt einen Offset innerhalb der gemessenen Bilddaten, der ja gerade einen quantitativen Vergleich zeitlich auseinander liegender Messungen mit der geforderten absoluten Genauigkeit nicht möglich macht. Im Konkreten könnte die Korrektur der gemessenen Bilddaten bei der Digitalisierungseinrichtung mit Hilfe einer Eingangs-Lookup-Tabelle realisiert werden. Diese Eingangs-Lookup-Tabelle (LUT) kann derart implementiert sein, dass die Intensität der gemessenen Bilddaten bei dem Digitalisierungsschritt gemäß den gemessenen Referenzsignalen des Referenzstrahlengangs derart digitalisiert werden, dass ein weiterer Korrekturschritt der so digitalisierten Bilddaten nicht mehr erforderlich ist. Diese Vorgehensweise hat den Vorteil, dass dann die Korrektur "online", also bereits während der Bildaufnahme, erfolgen kann.

Im Hinblick auf eine weitere Ausführung könnte in dem Referenzstrahlengang mindestens eine weitere Lichtquelle vorgesehen sein, die beispielsweise zu Kalibrierungszwecken der im Referenzstrahlengang befindlichen optischen Komponenten eingesetzt werden kann. Des weiteren ist es denkbar, dass in dem Referenzstrahlengang mindestens ein weiterer Detektor angeordnet ist. So könnte beispielsweise mit einem zusätzlichen Detektor die Lichtintensität im Referenzstrahlengang vor einem optischen Element des Referenzstrahlengangs und mit einem weiteren Detektor die Intensität nach diesem optischen Element gemessen werden, um so mögliche Störeinflüsse dieses optischen Elements ausschließen bzw. kompensieren zu können.

Zur Kompensation der Temperaturabhängigkeit der optischen Elemente, die im Beleuchtungs- und/oder im Detektionsstrahlengang, nicht jedoch im Referenzstrahlengang angeordnet sind, könnten diese auf einer konstanten Temperatur gehalten werden. Dies könnte wie bei dem Filteraufnahmeelement ebenfalls mit einer geregelten Heizung realisiert werden.

In verfahrensmäßiger Hinsicht wird zur Lösung der eingangs genannten Aufgabe ein Verfahren mit den Merkmalen des Patentanspruches 10 angegeben. Danach ist ein erfindungsgemäßes Verfahren dadurch gekennzeichnet, dass der Nachweis des Referenzlichts über die gleiche Detektionseinrichtung erfolgt, mit der das Detektionslicht detektierbar ist und dass neben dem Referenzlicht ein weiterer Lichtstrahl ausgekoppelt wird, dessen Intensität mit einem lichtempfindlichen Sensor nachgewiesen wird, wobei das Signal des lichtempfindlichen Sensors als Referenzspannung für eine Digitalisierungseinrichtung dient.

Somit können Kurz- und Langzeitschwankungen der Einzelkomponenten des Laserscanmikroskops kompensiert werden, vor allem ist es durch die mit der Objektmessung zeitgleich verlaufende Referenzmessung möglich, Kurzzeitschwankungen der Komponenten zu kompensieren.

Im Hinblick auf die Kompensation von Langzeitschwankungen der in dem Laserscanmikroskop befindlichen Baugruppen ist in vorteilhafter Weise vorgesehen, unmittelbar vor und/oder nach jedem Meßzyklus Referenzsignale zu messen, mit denen die gemessenen Objektbilddaten korrigiert werden können. Hierbei könnten quantitatve Werte wie die aktuelle Laserlichtleistung der verwendeten Lichtquelle oder der Dunkelstrom der Detektionseinrichtung von besonderem Interesse sein. Ein Meßzyklus könnte aus einer ein-, zwei- oder dreidimensionalen Datenaufnahme bestehen.

Zur Referenzkorrektur werden zumindest die im folgenden aufgeführten Meßgrößen gemessen, nämlich der Dunkelstrom $I_0$, die Referenz R sowie der Dunkelstrom $R_0$ der Referenz.

Mit den gemessenen Referenzsignalen werden die gemessenen Bilddaten $I_{XYZ}$ in geeigneter Weise korrigiert, vorzugsweise gemäß der Vorschrift

$$I_{XYZ,KORR} = F * (I_{XYZ} - I_0) / (R - R_0).$$

Hierbei wird für die Bezeichnung F ein geeigneter Skalierungsfaktor eingesetzt, der letztendlich die gemessenen Bilddaten während der Korrektur auf einen geeigneten Digitalisierungsbereich abbildet, beispielsweise auf den 12-Bit-Bereich, der die Grauwerte von 0 bis 4095 umfaßt.

Zur Vereinfachung der Referenzkorrektur könnte $I_0=R_0$ gesetzt werden, wenn nämlich aufgrund der durchgeführten Messungen des konkret verwendeten Referenzkorrekturverfahrens der Dunkelstrom $R_0$ der Referenz sich vom Wert her von dem Dunkelstrom $I_0$ des Systems bei ausgeblendeter Lichtquelle kaum unterscheidet.

Es gibt nun verschiedene Möglichkeiten, die Lehre der vorliegenden Erfindung in vorteilhafter Weise auszugestalten und weiterzubilden. Dazu ist einerseits auf die den nebengeordneten Patentansprüchen 1 und 10 nachgeordneten Ansprüche, andererseits auf die nachfolgende Erläuterung zweier Ausführungsbeispiele der Erfindung anhand der Zeichnungen zu verweisen. In Verbindung mit der Erläuterung der bevorzugten Ausführungsbeispiele der Erfindung anhand der Zeichnungen werden auch im allgemeinen bevorzugte Ausgestaltungen und Weiterbildungen der Lehre erläutert. In den Zeichnungen zeigt

Fig. 1 in einer schematischen Darstellung ein Ausführungsbeispiel eines erfindungsgemäßen Laserscanmikroskops, wobei dort die Komponenten des Laserscanmikroskops vereinfacht dargestellt sind,

Fig. 2 in einer schematischen Darstellung das Laserscanmikroskop aus Fig. 1, bei dem eine alternative Beleuchtungsvorrichtung vorgesehen ist und

Fig. 3 in einer schematischen Darstellung ein Filteraufnahmeelement.

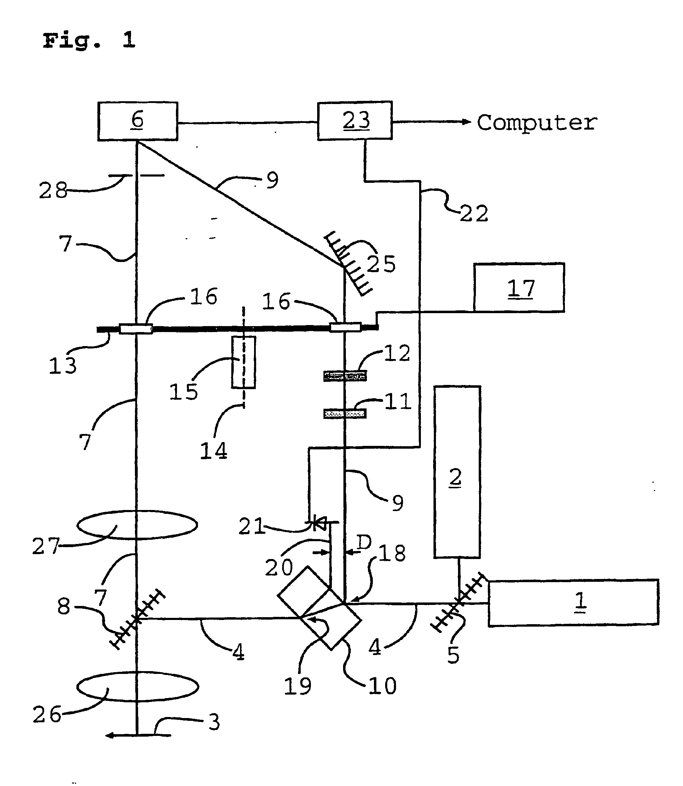

In der schematischen Darstellung der Fig. 1 ist ein konfokales Laserscanmikroskop gezeigt, das einen zwischen den beiden Laserlichtquellen 1, 2 und dem Objekt 3 verlaufenden Beleuchtungsstrahlengang 4 aufweist. Hierbei werden die beiden Strahlen der Laser 1 und 2 über den Strahlvereiniger 5 zusammengeführt. Zwischen dem Objekt 3 und der Detektionseinrichtung 6 verläuft der Detektionsstrahlengang 7, wobei zwischen dem Strahlteiler 8 und dem Objekt 3 der Beleuchtungsstrahlengang 4 mit dem Detektionsstrahlengang 7 identisch ist.

Das konfokale Laserscanmikroskop weist einen Referenzstrahlengang 9 auf, in den Referenzlicht des Beleuchtungsstrahlengangs 4 eingekoppelt wird, wobei das Referenzlicht von der Detektionseinrichtung 6 qualitativ und quantitativ nachgewiesen wird. Hierbei wird an der Auskopplungsstelle 10 bzw. 18 Licht des Beleuchtungsstrahlengangs 4 in den Referenzstrahlengang 9 eingekoppelt, wobei hier die Auskopplungsstelle 10 zwischen dem Strahlvereiniger 5 und dem Strahlteiler 8 angeordnet ist.

In dem Referenzstrahlengang 9 sind weitere optische Komponenten angeordnet. Hierbei hat die Streuscheibe 11 die Aufgabe, das aus dem Beleuchtungstrahlengang kommende kohärente Referenzlicht inkohärent zu machen und darüber hinaus dessen Intensität an die Intensität des vom Objekt 3 zu detektierende Detektionslicht anzupassen. Die Streuscheibe 11 hat weiterhin die Aufgabe, das Referenzlicht für die Detektionseinrichtung 6 positionsunempfindlich zu machen, d. h. den im Querschnitt punktförmigen Referenzlichtstrahl etwas aufzuweiten, so dass - verglichen zur Fluoreszenzlichtdetektion - nahezu die gleichen Nachweisbedingungen vorliegen. Im weiteren Verlauf ist ein Strahlabschwächer 12 in Form eines Neutralglasfilters angeordnet, der zusätzlich zur Anpassung der Lichtintensitäten im Detektionsstrahlengang 7 an die Lichtintensitäten im Referenzstrahlengang 9 verwendet wird und bezüglich des Transmissionsanteils geeignet dimensioniert ist.

Bei dem in Fig. 1 gezeigten Ausführungsbeispiel eines erfindungsgemäßen Mikroskops ist ein Filteraufnahmeelement 13 vorgesehen, das auf den Referenzstrahlengang 9 und den Detektionsstrahlengang 7 wirkt. Das Filteraufnahmeelement 13 ist um die Achse 14 drehbar angeordnet und wird von dem Motor 15 in die gewünschten Positionen gefahren.

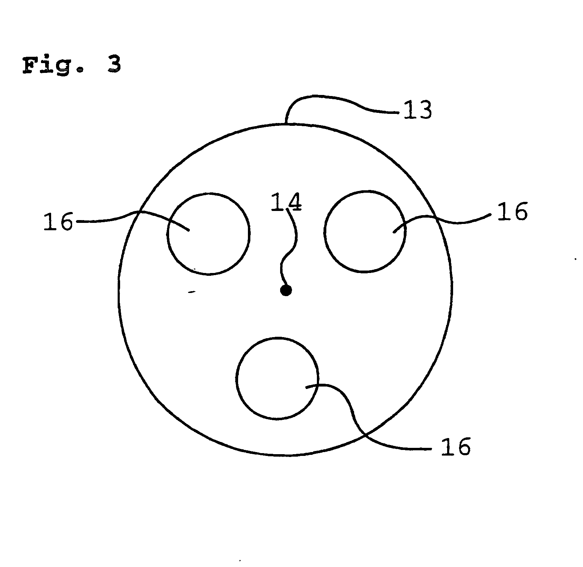

Das Filteraufnahmeelement 13 weist, wie in Fig. 3 gezeigt, drei Aufnahmehalterungen für Filtereinsätze 16 auf. Hierbei wird in der einen Aufnahmehalterung der Sperrfilter für die Laserlichtquelle 1 eingesetzt, in der nächsten Aufnahmehalterung wird der Sperrfilter für den Laser 2 eingesetzt; die dritte Aufnahmehalterung verbleibt leer. Unter dem Begriff Sperrfilter ist in diesem Zusammenhang zu verstehen, dass Licht aller Wellenlängen, ausgenommen der Anregungswellenlänge der entsprechenden Laserlichtquelle, den Sperrfilter passieren kann.

Für das drehbar angeordnete Filteraufnahmeelement sind vier Arbeitspositionen vorgesehen. In der ersten wird die Aufnahmehalterung des Sperrfilters für den Laser 1 so positioniert, dass nur das Licht des Detektionsstrahlengangs 7 zur Detektionseinrichtung 6 freigegeben wird. In der zweiten Arbeitsposition wird das Filteraufnahmeelement 13 so positioniert, dass die Aufnahmehalterung mit dem Sperrfilter des Lasers 2 in dem Detektionsstrahlengang 7 positioniert wird, um ebenfalls nur Licht des Detektionsstrahlengangs 7 zur Detektionseinrichtung 6 freizugeben. In der dritten Arbeitsposition des Filteraufnahmeelements 13 wird die leer gebliebene Aufnahmehalterung in dem Referenzstrahlengang 9 positioniert, so dass nur Referenzlicht des Referenzstrahlengangs 9 zu der Detektionseinrichtung 6 freigegeben wird. Eine vierte Betriebsposition des Filteraufnahmeelements 13 ist derart vorgesehen, dass weder Licht des Detektionsstrahlengangs 7 noch Licht des Referenzstrahlengangs 9 zur Detektionseinrichtung 6 gelangt.

Da in dieser konkret beschriebenen erfindungsgemäßen Ausführung nicht vorgesehen ist, die einzelnen in dem Filteraufnahmeelement 13 eingesetzten Filtereinsätze 16 quantitativ mit dem Referenzstrahlengang 9 zu vermessen, wird zur Vermeidung von äußeren Temperatureinflüssen auf die Filtereinsätze 16 das gesamte Filteraufnahmeelement 13 mit einer Temperatursteuerung 17 und einem nicht eingezeichneten Heizwiderstand auf konstanter Temperatur gehalten.

Der im Referenzstrahlengang 9 angeordnete Strahlabschwächer 12 wie auch die in den Referenzstrahlengang 9 einschwenkbaren Filtereinsätze 16 sind - von der Auskopplungsstelle 10 aus gesehen - der Streuscheibe 11 nachgeordnet. Da das von der Auskopplungsstelle 10 in den Referenzstrahlengang 9 eingekoppelte Referenzlicht nach dem Durchgang durch die Streuscheibe 11 nicht mehr kohärent ist, werden störende Interferenzerscheinungen an den der Streuscheibe 11 nachgeordneten Elemente 12, 16 im Referenzstrahlengang 9 vermieden.

Für das im Beleuchtungsstrahlengang 4 angeordnete Auskopplungselement dient ein dicker Strahlteiler, der als dicke planparallele Glasplatte ausgeführt ist. Er ist in einem Winkel von 45° relativ zu dem Beleuchtungsstrahlengang 4 angeordnet und weist keine besonderen wellenlängenspezifischen Reflexions- und Transmissionseigenschaften auf. Die Dicke der Strahlteilerplatte beträgt 10 Millimeter. Die in den Referenzstrahlengang 9 eingekoppelte Referenzlichtintensität ist vor allem von dem Brechungsindex der Strahlteilerplatte abhängig (Fresnel'sche Formeln). Somit wird der Hauptreflex des Beleuchtungslichts an der den Lasern 1, 2 zugewandten Glasoberfläche der Strahlteilerplatte 18 als Referenzlicht für den Referenzstrahlengang 9 verwendet.

An der den Lichtquellen abgewandten Glasoberfläche der Strahlteilerplatte 10 tritt in der Strahlteilerplatte 10 ein Sekundärreflex 19 auf, der, nachdem er an der den Lasern 1, 2 zugewandten Glasoberfläche der Strahlteilerplatte 10 ausgetreten ist, in Richtung des Referenzstrahlengangs 9 seitlich versetzt zu diesem verläuft. In Abhängigkeit von der Dicke der Strahlteilerplatte 10 kann somit der laterale Strahlversatz D angepaßt werden. Darüber hinaus ist durch den lateralen Strahlversatz D keine räumliche Überlagerung des Referenzlichtstrahls 9 (Hauptreferenz) mit dem weiter ausgekoppelten Lichtstrahl 20 (Sekundärreflex) möglich. Hierdurch werden auch Interferenzerscheinungen dieser beiden, aus dem Beleuchtungsstrahlengang 4 ausgekoppelten Lichtstrahlen vermieden, die die Meßergebnisse des Laserscanmikroskops und des Referenzstrahlengangs 9 nachteilig beeinflussen würden.

Der durch den Sekundärreflex 19 zusätzlich ausgekoppelte Lichtstrahl 20 wird mit einem lichtempfindlichen Sensor 21 nachgewiesen, dessen Signalausgang über eine Leitung 22 direkt mit der Digitalisierungseinrichtung 23 verbunden ist. Die mit der Detektionseinrichtung 6 gemessenen Lichtintensitäten der Strahlengänge 7, 9 werden von der Digitalisierungseinrichtung 23 digitalisiert und einem Computer zugeführt. Somit ist es möglich, während der gesamten Messung der beiden Strahlengänge 7, 9 ein permanent vorliegendes Referenzsignal zur Verfügung zu haben, mit dem in erster Linie die Kurzzeitschwankungen der Laser 1, 2 korrigiert werden können. Erfindungsgemäß wird das Referenzsignal des lichtempfindlichen Sensors 21 als Referenzspannung für die Digitalisierungseinrichtung 23 verwendet.

Die gemessenen Bilddaten werden mit Hilfe der vom Referenzstrahlengang 9 gemessenen Referenzsignale geeignet korrigiert. Hierzu ist vorgesehen, dass in vorteilhafter Weise die Korrektur der gemessenen Bilddaten mit einer Eingangs-Lookup-Tabelle bei der Digitalisierungseinrichtung 23 realisiert wird. Somit wird eine aufgrund von Langzeitschwankungen hervorgerufene Drift einer Baugruppe mit Hilfe der Referenzmessung bei der Digitalisierung mit einem entsprechenden Digitalisierungsoffset versehen. Daher werden keine weiteren elektronischen Bauteile oder mit dem Computer vorzunehmenden Berechnungsschritte benötigt.

Für das Verfahren zur Referenzkorrektur mit dem zuvor erörterten konfokalen Laserscanmikroskop ist wesentlich, dass das aus dem Beleuchtungsstrahlengang 4 zur Fehlerkompensation dienende Referenzlicht in den Referenzstrahlengang 9 eingekoppelt und von einer Dekektionseinrichtung 6 qualitativ und/oder quantitativ nachgewiesen wird. Hierbei werden vor und/oder nach jedem Meßzyklus Referenzsignale gemessen, mit denen gemessene Objektbilddaten geeignet korrigiert werden. Ein Meßzyklus ist in diesem Ausführungsbeispiel durch eine zweidimensionale Datenaufnahme gegeben, d.h. zu Beginn und nach der Aufnahme einer jeden Bildebene wird eine Referenzmessung mit dem Referenzstrahlengang 9 durchgeführt.

So wird vor bzw. nach einem Meßzyklus nach entsprechender Positionierung des Filteraufnahmeelements 13 zunächst das Referenzsignal R des aktiven Lasers 1 oder 2 gemessen, der zuvor bei der zweidimensionalen Datenaufnahme des Objekts verwendet wurde. Nach erneuter Positionierung des Filteraufnahmeelements 13 wird der Dunkelstrom $I_0$ des Systems gemessen. Hierbei wird Licht aus dem Detektionsstrahlengang 7 und dem Referenzstrahlengang 9 ausgeblendet.

Die gemessenen Bilddaten $I_{XYZ}$ werden mit Hilfe der beiden gemessenen Referenzwerte R und $I_0$ gemäß der Vorschrift

$$I_{XYZ,KORR} = F \cdot (I_{XYZ} - I_0) / (R - I_0)$$

korrigiert. F wurde hierbei so gewählt, dass entsprechend dem Dynamikbereich der gemessenen Bilddaten nach der Digitalisierung mit der Digitalisierungseinrichtung 23 ein Grauwertbereich von 24 Bit, entsprechend den Grauwerten von 0 bis 16777215, vorliegt. Diese Korrektur wird in vorteilhafter Weise mit Hilfe einer Eingangs-Lookup-Tabelle realisiert.

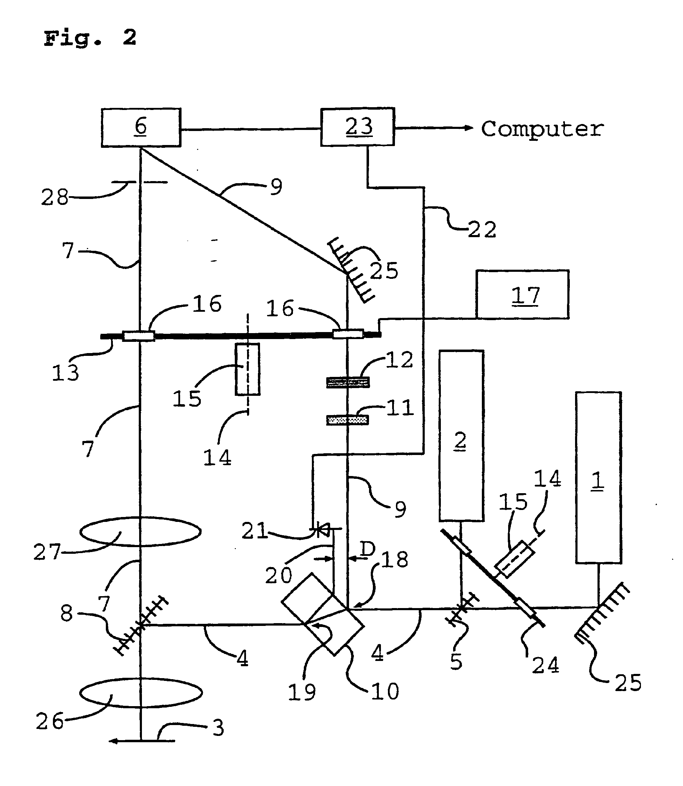

Das Ausführungsbeispiel gemäß Fig. 2 unterscheidet sich von dem Ausführungsbeispiel der Fig. 1 dadurch, dass zur Selektion der beiden Laser 1 und 2 ein zusätzliches, drehbar angeordnetes Filteraufnahmeelement 24 vorgesehen ist. Mit diesem Filteraufnahmeelement 24 ist es möglich, entweder Licht vom Laser 1 oder Laser 2 oder keinem der beiden Laser 1, 2 zu selektieren.

Abschließend sei ganz besonders darauf hingewiesen, dass die voranstehend erörterten Ausführungsbeispiele lediglich zur Beschreibung der beanspruchten Lehre dienen, diese jedoch nicht auf die rein willkürlich gewählten Ausführungsbeispiele einschränkt.

**Patentansprüche**

1. Laserscanmikroskop, vorzugsweise konfokales Laserscanmikroskop, mit einem zwischen einer Laserlichtquelle (1, 2) und einem Objekt (3) verlaufenden Beleuchtungsstrahlengang (4) und einem zwischen dem Objekt (3) und einer Detektionseinrichtung (6) verlaufenden Detektionsstrahlengang (7), wobei ein zur Referenzmessung dienender Referenzstrahlengang (9) vorgesehen ist, in den aus dem Beleuchtungsstrahlengang (4) Referenzlicht einkoppelbar ist und wobei das Referenzlicht qualitativ und/oder quantitativ nachweisbar ist, **dadurch gekennzeichnet, dass** der Nachweis des Referenzlichts (9) über die gleiche Detektionseinrichtung (6) erfolgt, mit der das Detektionslicht detektierbar ist, dass die mit der Detektionseinrichtung (6) gemessenen Lichtintensitöten der Strahlengänge (7,9) von einer Digitalisierungseinrichtung (23) digitalisiert werden und dass neben dem Referenzlicht, ein weiterer Lichtstrahl (20) ausgekoppelt wird, dessen Intensität mit einem zusäzlichen, lichtempfindlichen Sensor (21) nachgewiesen wird wobei das Signal des lichtempfindlichen Sensors (21) als Referenzspannung für die Digitalisierungseinrichtung (23) dient.

2. Laserscanmikroskop nach Anspruch 1, **dadurch gekennzeichnet, dass** der Referenzstrahlengang (9) zwischen der Auskopplungsstelle (10) und der Detektionseinrichtung (6) verläuft und wobei als Auskopplungselement (10) ein vorzugsweise mindestens 4 mm dicker Strahlteiler verwendet werden kann.

3. Laserscanmikroskop nach Anspruch 1 oder 2, **dadurch gekennzeichnet dass** das Referenzsignal als Referenzspannung für die Digitalisierungseinrichtung (23) verwendet wird und wobei die Auskopplungsstelle (10) vorzugsweise im Beleuchtungsstrahlengang (4) zwischen der Laserlichtquelle (1, 2) und der Strahlteilereinrichtung (8) und/oder an einem als Strahlteilereinrichtung (8) wirkenden AOBS vorgesehen vorgesehen ist.

4. Laserscanmikroskop nach Anspruch 1, **dadurch gekennzeichnet, dass** in dem Referenzstrahlengang (9) weitere optische Komponenten angeordnet sind, wobei in dem Referenzstrahlengang (9) eine Streuscheibe (11) und/oder mindestens ein Strahlumlenkelement (25) und/oder mindestens ein lichtempfindlicher Sensor und/oder mindestens ein Strahlabschwächer (12) und/oder eine auf den Referenzstrahlengang (9) und/oder Detektionsstrahlengang (7) wirkendes und mindestens einen Filtereinsatz (16) aufweisendes und beweglich angeordnetes Filteraufnahmeelement (13) angeordnet sein kann.

5. Laserscanmikroskop nach Anspruch 4, **dadurch gekennzeichnet, dass** mit dem Filteraufnahmeelement (13) entweder kein Licht oder Licht vom Detektionsstrahlengang (7) oder Licht vom Referenzstrahlengang (9) hin zur Detektionseinrichtung (6) selektierbar ist und/oder dass zur Vermeidung von Störungen aufgrund der Temperaturabhängigkeit der in dem Filteraufnahmeelement (13) verwendeten Filter (16) das Filteraufnahmeelement (13) auf einer konstanten Temperatur gehalten werden kann, wobei das Filteraufnahmeelement (13) durch eine geeignet geregelte Heizung (17), insbesondere durch einen Heizwiderstand, auf einer konstanten Temperatur gehalten werden kann.

6. Laserscanmikroskop nach Anspruch 4 oder 5, **dadurch gekennzeichnet, dass** die weiteren optischen Elemente des Referenzstrahlengangs (9) von der Auskopplungsstelle (10) aus gesehen nach der Streuscheibe (11) angeordnet sind.

7. Laserscanmikroskop nach einem der Ansprüche 1 bis 6, **dadurch gekennzeichnet, dass** die gemessenen Bilddaten mit Hilfe von den mit dem Referenzstrahlengang (9) gemessenen Referenzsignalen geeignet korrigiert werden, wobei die Korrektur der gemessenen Bilddaten bei der Digitalisierungseinrichtung (23) mit Hilfe einer Eingangs-Lookup-Tabelle realisiert werden kann.

8. Laserscanmikroskop nach einem der Ansprüche 1 bis 7, **dadurch gekennzeichnet, dass** für den Referenzstrahlengang (9) mindestens eine weitere Lichtquelle vorgesehen ist und/oder dass für die Detektion des Lichts im Referenzstrahlengang (9) mindestens ein weiterer Detektor vorgesehen ist.

9. Laserscanmikroskop nach einem der Ansprüche 1 bis 8, **dadurch gekennzeichnet, dass** die optischen Komponenten (8, 26, 27) des Beleuchtungs- und/oder Detektionsstrahlengangs, die von der Lichtquelle aus gesehen nach der Auskopplungsstelle des Referenzstrahlengangs angeordnet sind, zur Kompensation der Temperaturabhängigkeit auf einer konstanten Temperatur gehalten werden.

10. Verfahren zur Referenzkorrektur bei einem Laserscanmikroskop, vorzugsweise einem konfokalen Laserscanmikroskop, mit einem zwischen einer Laserlichtquelle (1, 2) und einem Objekt (3) verlaufenden Beleuchtungsstrahlengang (4) und einem zwischen dem Objekt (3) und einer Detektionseinrichtung (6) verlaufenden Detektionsstrahlengang (7), wobei ein zur Fehlerkompensation dienender Referenzstrahlengang (9) vorgesehen ist, in den aus dem Beleuchtungsstrahlengang (4) Referenzlicht eingekoppelt und wobei das Referenzlicht qualitativ und/oder quantitativ nachgewiesen wird, insbesondere zur Anwendung bei einem Laserscanmikroskop nach einem der Ansprüche 1 bis 9,
**dadurch gekennzeichnet, dass** der Nachweis des Referenzlichts (9) über die gleiche Detektionseinrichtung (6) erfolgt, mit der das Detektionslicht detektierbar ist dass die mit der Detektions einrichtung (6) gemessenen Lichtintensitöten der Strahlengänge (7,9) von einer Digitalisierungseinrichtung (23) digitalisiert werden und dass neben dem Referenzlicht ein weiterer Lichtstrahl (20) ausgekoppelt wird, dessen Intensität mit einem lichtempfindlichen Sensor (21) nachgewiesen wird, wobei das Signal des lichtempfindlichen Sensors (21) als Referenzspannung für die Digitalisierungseinrichtung (23) dient.

11. Verfahren zur Referenzkorrektur nach Anspruch 10, **dadurch gekennzeichnet, dass** vor und/oder nach jedem Meßzyklus Referenzsignale gemessen werden, mit denen die gemessenen Objektbilddaten korrigiert werden, wobei ein Meßzyklus eine eindimensionale Datenaufnahme oder eine zweidimensionale Datenaufnahme oder eine drimensionale Datenaufnahme umfassen kann und wobei als Referenzsignal der Dunkelstrom $I_0$ des Systems bei ausgeblendeter Lichtquelle gemessen werden kann oder die Referenz R gemessen werden kann oder der Dunkelstrom $R_0$ der Referenz gemessen werden kann.

12. Verfahren zur Referenzkorrektur nach Anspruch 10 oder 11, **dadurch gekennzeichnet, dass** die korrigierten Bilddaten $I_{XYZ,KORR}$ mit Hilfe der gemessenen Bilddaten $I_{XYZ}$ gemäß der Vorschrift

$$I_{XYZ,KORR} = F * (I_{XYZ} - I_0) / (R - R_0)$$

korrigiert werden, wobei F ein geeigneter Skalierungsfaktor ist und wobei $I_0 = R_0$ gesetzt werden kann.

## Claims

1. Laser scanning microscope, preferably a confocal laser scanning microscope, having an illumination beam path (4) extending between a laser light source (1, 2) and an object (3) and a detection beam path (7) extending between the object (3) and a detection device (6), wherein a reference beam path (9) serving for reference measurement is provided, reference light being couplable out of the illumination beam path (4) into the reference beam path (9) and wherein the reference light is qualitatively and/or quantitatively detectable, **characterised in that** detection of the reference light (9) is effected using the same detection device (6) with which the detection light is detectable, **in that** the light intensities of the beam paths (7, 9) measured by the detection device (6) are digitised by a digitising device (23) and **in that** in addition to the reference light a further light beam (20), the intensity of which is detected using an additional light-sensitive sensor (21), is coupled out, the signal of the light-sensitive sensor (21) being used as reference voltage for the digitising device (23).

2. Laser-scanning microscope according to claim 1, **characterised in that** the reference beam path (9) extends between the coupling-out point (10) and the detection device (6) and wherein a beam splitter that is preferably at least 4 mm thick can be used as coupling-out element (10).

3. Laser-scanning microscope according to claim 1 or 2, **characterised in that** the reference signal is used as reference voltage for the digitising device (23) and wherein the coupling-out point (10) is preferably provided in the illumination beam path (4) between the laser light source (1, 2) and the beam splitter device (8) and/or at an AOBS acting as a beam splitter device (8).

4. Laser-scanning microscope according to claim 1, **characterised in that** further optical components are arranged in the reference beam path (9), wherein a diffuser disc (11) and/or at least one beam deflection element (25) and/or at least one light-sensitive sensor and/or at least one beam attenuator (12) and/or a movably arranged filter receiving element (13) acting on the reference beam path (9) and/or detection beam path (7) and comprising at least one filter insert (16), are arranged in the reference beam (9).

5. Laser-scanning microscope according to claim 4, **characterised in that**, using the filter receiving element (13), either no light, or light from the detection beam path (7), or light from the reference beam path (9) can be selected towards the detection device (6) and/or **in that**, to avoid disturbance due to the temperature dependence of the filters (16) used in the filter receiving element (13), the filter receiving element (13) can be maintained at a constant temperature, wherein the filter receiving element (13) can be maintained at a constant temperature by a suitably controlled heating system (17), especially by a heating resistor.

6. Laser-scanning microscope according to claim 4 or 5, **characterised in that** the further optical elements of the reference beam path (9) are arranged after the diffuser disc (11), viewed from the coupling-out point (10).

7. Laser-scanning microscope according to any one of claims 1 to 6, **characterised in that** the measured image data are suitably corrected by means of the reference signals measured with the reference beam path (9), wherein the correction of the measured image data can be accomplished in the digitising device (23) by means of an input look-up table.

8. Laser-scanning microscope according to any one of claims 1 to 7, **characterised in that** at least one further light source is provided for the reference beam path (9) and/or **in that** at least one further detector is provided for detection of the light in the reference beam path (9).

9. Laser-scanning microscope according to any one of claims 1 to 8, **characterised in that** the optical components (8, 26, 27) of the illumination and/or detection beam path, which are arranged after the coupling-out point of the reference beam path, viewed from the light source, are maintained at a constant temperature to compensate for the temperature dependence.

10. Method for reference correction in a laser-scanning microscope, preferably a confocal laser scanning microscope, having an illumination beam path (4) extending between a laser light source (1, 2) and an object (3) and a detection beam path (7) extending between the object (3) and a detection device (6), wherein a reference beam path (9) serving for error compensation is provided, reference light being coupled out of the illumination beam path (4) into the reference beam path (9) and wherein the reference light is qualitatively and/or quantitatively detected, especially for use in a laser- scanning microscope according to any one of claims 1 to 9, **characterised in that** detection of the reference light (9) is effected using the same detection device (6) with which the detection light is detectable, **in that** the light intensities of the beam paths (7, 9) measured by the detection device (6) are digitised by a digitising device (23) and **in that** in addition to the reference light a further light beam (20) is coupled out, the intensity of which is detected using a light-sensitive sensor (21), the signal of the light-sensitive sensor (21) serving as reference voltage for the digitising device (23).

11. Method for reference correction according to claim 10, **characterised in that** reference signals with which the measured object image data are corrected are measured before and/or after each measurement cycle, wherein a measurement cycle can comprise a one-dimensional data recording or a two-dimensional data recording or a three-dimensional data recording and wherein, as reference signal, the dark current $I_0$ of the system with the light source masked can be measured or the reference R can be measured or the dark current $R_0$ of the reference can be measured.

12. Method for reference correction according to claim 10 or 11, **characterised in that** the corrected image data $I_{XYZ,CORR}$ is corrected using measured image data $I_{XYZ}$ according to the equation

$$I_{XYZ,CORR} = F^W (I_{XYZ} - I_O / (R - R_O)$$

wherein F is a suitable scaling factor and $I_0 = R_0$ can be set.

**Revendications**

1. Microscope à balayage laser, de préférence microscope à balayage laser à foyer commun, avec une marche des rayons d'éclairage (4) s'étendant entre une source de lumière laser (1,2) et un objet (3) et une marche des rayons de détection (7) s'étendant entre l'objet (3) et un dispositif de détection (6), une marche des rayons de référence (9) servant pour la mesure de référence étant prévue, dans laquelle de la lumière de référence sortant de la marche des rayons d'éclairage (4) peut être modulée et la lumière de référence pouvant être mise en évidence qualitativement et/ou quantitativement,
**caractérisé par le fait que** la mise en évidence de la lumière de référence (9) a lieu par l'intermédiaire du même dispositif de détection (6) par lequel la lumière de détection peut être détectée, que les intensités lumineuses des marches des rayons (7, 9) sont numérisées par un dispositif de numérisation (23) et que, à côté de la lumière de référence, un autre rayon lumineux (20) est déclenché, dont l'intensité est mise en évidence par un capteur sensible à la lumière (21) supplémentaire, le signal du capteur sensible à la lumière (21) servant de tension de référence pour le dispositif de numérisation (23).

2. Microscope à balayage laser selon la revendication 1,
**caractérisé par le fait que** la marche des rayons de référence (9) s'étend entre le point de déclenchement (10) et le dispositif de détection (6) et une lame séparatrice d'une épaisseur de préférence d'au moins 4 mm pouvant être utilisée en tant qu'élément de déclenchement (10).

3. Microscope à balayage laser selon la revendication 1 ou 2,

**caractérisé par le fait que** le signal de référence est utilisé en tant que tension de référence pour le dispositif de numérisation (23) et le point de déclenchement (10) étant de préférence prévu dans la marche des rayons d'éclairage (4) entre la source de lumière laser (1,2) et le dispositif de lame séparatrice (8) et/ou à un AOBS agissant en tant que dispositif de lame séparatrice (8).

4. Microscope à balayage laser selon la revendication 1,

**caractérisé par le fait que** d'autres composants optiques sont disposés dans la marche des rayons de référence (9), un verre diffusant (11) et/ou au moins un élément déviateur de rayon (25) et/ou au moins un capteur sensible à la lumière et/ou au moins un affaiblisseur de rayon (12) et/ou un élément de filtre de réception (13) agissant sur la marche des rayons de référence (9) et/ou la marche des rayons de détection (7) et présentant au moins un filtre de rechange (16) et disposé mobile peut être disposé dans la marche des rayons de référence (9).

5. Microscope à balayage laser selon la revendication 4,

**caractérisé par le fait que**, avec l'élément de filtre de réception (13), soit pas de lumière soit de la lumière de la marche des rayons de détection (7) ou de la lumière de la marche des rayons de référence (9) peut être sélectée en direction du dispositif de détection (6) et/ou que, pour éviter des perturbations sur la base de la dépendance vis-à-vis de la température, les filtres (16) de l'élément de filtre de réception (13) utilisés dans l'élément de filtre de réception (13) peuvent être maintenus à une température constante, l'élément de filtre de réception (13) pouvant être maintenu à une température constante par un radiateur (17) régulé de manière appropriée, en particulier par une résistance de chauffage.

6. Microscope à balayage laser selon la revendication 4 ou 5,

**caractérisé par le fait que** les autres éléments optiques de la marche des rayons de référence (9) sont disposés, vus depuis le point de déclenchement (10), après le verre diffusant (11).

7. Microscope à balayage laser selon l'une des revendications 1 à 6,

**caractérisé par le fait que** les données d'images mesurées sont corrigées de manière appropriée à l'aide des signaux de référence mesurés par la marche des rayons de référence (9), la correction des données d'images mesurées pouvant être réalisée par le dispositif de numérisation (23) à l'aide d'un tableau d'une table à consulter d'entrée.

8. Microscope à balayage laser selon l'une des revendications 1 à 7,

**caractérisé par le fait qu'**au moins une autre source lumineuse est prévue pour la marche des rayons de référence (9) et/ou qu'au moins un autre détecteur est prévu pour la détection de la lumière dans la marche des rayons de référence (9).

9. Microscope à balayage laser selon l'une des revendications 1 à 8,

**caractérisé par le fait que** les composants optiques (8, 26, 27) des marches des rayons d'éclairage et/ou de détection qui, vus depuis la source lumineuse, sont disposés après le point de déclenchement de la marche des rayons de référence, sont maintenus à une température constante pour la compensation de la dépendance vis-à-vis de la température.

10. Procédé pour la correction de la référence pour un microscope à balayage laser, de préférence un microscope à balayage laser à foyer commun, avec une marche des rayons d'éclairage (4) s'étendant entre une source de lumière laser (1,2) et un objet (3) et une marche des rayons de détection (7) s'étendant entre l'objet (3) et un dispositif de détection (6), une marche des rayons de référence (9) servant pour la compensation de défauts étant prévue, dans laquelle est modulée de la lumière de référence de la marche des rayons d'éclairage (4), et la lumière de référence étant mise en évidence qualitativement et/ou quantitativement, en particulier pour l'utilisation avec un microscope à balayage laser selon l'une des revendications 1 à 9,

**caractérisé par le fait que** la mise en évidence de la lumière de référence (9) a lieu par l'intermédiaire du même dispositif de détection (6) par lequel la lumière de détection peut être détectée, que les intensités lumineuses des marches des rayons (7, 9) mesurées par le dispositif de détection (6) sont numérisées par un dispositif de numérisation (23) et que, à côté de la lumière de référence, un autre rayon lumineux (20) est déclenché, dont l'intensité est mise en évidence par un capteur sensible à la lumière (21), le signal du capteur sensible à la lumière (21) servant de tension de référence pour le dispositif de numérisation (23).

11. Procédé pour la correction de la référence selon la revendication 10,

**caractérisé par le fait que**, avant et/ou après chaque cycle de mesures, des signaux de référence sont mesurés par lesquels les données d'images d'objet mesurées sont corrigées, ainsi que des mesures pouvant comprendre une réception de données unidimensionnelle ou une réception de données bidimensionnelle ou une réception de données tridimensionnelle et le courant d'obscurité $I_0$ du système pour une source lumineuse diaphragmée pouvant être mesuré en tant que signal de référence ou la référence R pouvant être mesurée ou le courant d'obscurité $R_0$ de la référence pouvant être mesuré

12. Procédé pour la correction de la référence selon la revendication 10 ou 11,
   **caractérisé par le fait que** les données d'images corrigées $I_{XYZ,CORR}$ sont corrigées à l'aide des données d'images mesurées $I_{XYZ}$ selon la règle

$$I_{XYZ,CORR} = F^* (I_{XYZ} - I_0) / (R - R_0),$$

F étant un facteur de cadrage approprié et $I_0 = R_0$ pouvant être fixé.

## Fig. 1

## Fig. 2

## Fig. 3